# EUROPÄISCHE PATENTSCHRIFT

(11) **EP 3 289 507 B1**
(45) Veröffentlichungstag und Bekanntmachung des Hinweises auf die Patenterteilung: **25.03.2020**
(21) Anmeldenummer: 16718359.9
(22) Anmeldetag: 25.04.2016
(51) Int. Cl.: G06F 21/35, G06F 21/64, H04L 29/06

(54) **ID-TOKEN, SYSTEM UND VERFAHREN ZUR ERZEUGUNG EINER ELEKTRONISCHEN SIGNATUR**
ID TOKEN, SYSTEM, AND METHOD FOR GENERATING AN ELECTRONIC SIGNATURE
JETON ID, SYSTÈME ET PROCÉDÉ DE GÉNÉRATION DE SIGNATURE ÉLECTRONIQUE

(30) Priorität: 27.04.2015 DE 102015207690
(43) Veröffentlichungstag der Anmeldung: 07.03.2018
(73) Patentinhaber: Bundesdruckerei GmbH, 10969 Berlin (DE)
(72) Erfinder: SCHOLZE, Steffen, 13469 Berlin (DE); SCHWAN, Matthias, 10437 Berlin (DE); MÜLLER, Frank, 10407 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2016/059195
(87) Internationale Veröffentlichungsnummer: WO 2016/173992

(56) Entgegenhaltungen:
- US-A1- 2008 250 082
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de/SharedDocs/Dow nloads/EN/BSI/Publications/TechGuidelines/ TR03110/BSI_TR-03110_Part-2-V2_20.pdf?__bl ob=publicationFile&v=1 [gefunden am 2016-03-10]
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]
- Ninjagedo: "python - What is the quickest way to hash a large arbitrary object? - Stack Overflow", , 10. April 2012 (2012-04-10), XP055286828, Gefunden im Internet: URL:http://stackoverflow.com/questions/100 97064/what-is-the-quickest-way-to-hash-a-l arge-arbitrary-object [gefunden am 2016-07-07]
- "Technical Guideline eID-Server", , 15. Januar 2014 (2014-01-15), XP055256439, Gefunden im Internet: URL:https://www.bsi.bund.de/SharedDocs/Dow nloads/DE/BSI/Publikationen/TechnischeRich tlinien/TR03130/TR-03130_TR-eID-Server_Par t1.pdf?__blob=publicationFile [gefunden am 2016-07-08]

## Beschreibung

Die Erfindung betrifft einen ID-Token, ein System sowie ein Verfahren zur Erzeugung einer elektronischen Signatur.

Die Verwendung von elektronischen Dokumenten zur Speicherung personenbezogener Daten, sogenannter Attribute bzw. Attributswerte, ist allgemein bekannt. Die auf dem Dokument gespeicherten Attributswerte können von einem Dienst nach vorheriger Authentisierung über einen gegen Verfälschen abgesicherten Kanal ausgelesen werden. Die ausgelesenen Attributswerte ergeben zusammen eine abgeleitete Identität des Nutzers. Durch die vorherige Verifizierung der Authentizität des Dokumentes und die gesicherte Verbindung ist die Echtheit der abgeleiteten Identität gewährleistet.

Um die Echtheit der Attributswerte bzw. der abgeleiteten Identität auch ohne das Dokument verifizieren zu können, ist bekannt, eine elektronische Signatur der Attributswerte bzw. der abgeleiteten Identität zu erzeugen.

Verfahren zur elektronischen Signierung von Attributen bzw. Attributswerten oder abgeleiteten Identitäten sind an sich aus dem Stand der Technik bekannt. Für die elektronische Signierung wird ein Schlüsselpaar erzeugt, welches aus einem geheimen (sogenannter "Private Key") und einem öffentlichen Schlüssel (sogenannter "Public Key") besteht. Im Allgemeinen wird aus den Attributswerten oder der abgeleiteten Identität ein HASH-Wert mit einem vordefinierten HASH-Algorithmus erzeugt. Der HASH-Wert wird dann mit dem geheimen Schlüssel verschlüsselt. Das so erhaltene Chiffrat stellt die elektronische Signatur dar. Der zu dem Schlüsselpaar gehörende öffentliche Schlüssel kann zur Verifizierung der Echtheit der Signatur verwendet werden, indem der HASH-Wert erneut aus den Attributswerten oder der abgeleiteten Identität erzeugt wird und die elektronische Signatur mit dem öffentlichen Schlüssel dechiffriert wird. Stimmen die beiden so erhaltenen HASH-Werte überein, so wird die elektronische Signatur als echt betrachtet.

Aus dem Stand der Technik ist bekannt, den geheimen bzw. privaten Schlüssel sowie die Attributswerte eines Nutzers auf einem ID-Token zu speichern. Zur Erzeugung der Hash-Werte der Attribute werden die Attribute von einem Computersystem ausgelesen. Anschließend erzeugt das Computersystem mit einem Hash-Algorithmus die Hash-Werte zu diesen Attributen und sendet diese zur Erzeugung der elektronischen Signatur an den ID-Token. Die erzeugte elektronische Signatur wird anschließend an das Computersystem gesendet. Das Computersystem erzeugt abschließend einen Datensatz aus dem Hash-Wert, den Attributen und der Signatur. Wenn dieser Datensatz einen öffentlichen Schlüssel beinhaltet, kann es sich um ein Zertifikat handelt, beispielsweise einer Dokumenten PKI oder ein Berechtigungszertifikat, beispielsweise von einer zur Ausstellung von Berechtigungszertifikaten ermächtigten Instanz. Ein solches Verfahren zur Erzeugung einer Signatur ist beispielsweise in der JP 2006-60 724 A gezeigt.

Da die Signatur vom ID-Token ohne Kenntnis bzw. Überprüfung, ob der Hash-Wert aus den übermittelten Attributswerten ermittelt wurde, erzeugt wird, wird dieses Verfahren als "blinde Signatur" bezeichnet. Nachteilig an diesem Verfahren ist, dass der Nutzer keine Kontrollmöglichkeit hat, ob die Hash-Werte zu den gesendeten Attributswerten korrespondieren.

In der DE 10 2013 201 245 A1 ist des Weiteren ein Verfahren gezeigt, bei dem auf Attributswerte, die in einer Chipkarte gespeichert sind, zugegriffen wird und mithilfe einer Schlüsselableitefunktion sowie Positionsdaten ein kryptographischer Schlüssel erzeugt wird.

Die technischen Richtlinien TR-03110-2: "Advanced Security Mechanisms for Machine Readable Travel Documents and eTDAS Token; Part 2 - Protocols for electronic IDentification, Authentication and trust Services (eIDAS)", Version 2.20 - Release Candidate, 15. Dezember 2014, und TR-03110-3: "Advanced Security Mechanisms for Machine Readable Travel Documents and eTDAS Token; Part 3 - Common Specifications", Version 2.20, 3. Februar 2015, beschreiben Sicherheitsmechanismen für Token, welche zum Identifizieren, Authentifizieren sowie für eine Nutzung von Trust Services verwendet werden.

Aufgabe der Erfindung ist es, ein Verfahren zur Erzeugung einer abgeleiteten Identität bereitzustellen, bei dem der Nutzer die vollständige Kontrolle über die zu signierenden Daten behält. Aufgabe der Erfindung ist des Weiteren, einen ID-Token sowie ein System zur Verwendung mit einem solchen Verfahren bereitzustellen, das ein schnelles und komfortables Erzeugen einer Signatur ermöglicht.

Die der Erfindung zugrunde liegenden Aufgaben werden mit den Merkmalen der unabhängigen Patentansprüche gelöst. Ausführungsformen der Erfindung sind in den abhängigen Ansprüchen angegeben.

Ausführungsformen der Erfindung sind besonders vorteilhaft, da die Erzeugung der Signatur vollständig auf dem ID-Token erfolgt. Dadurch ist es nicht erforderlich, den privaten Schlüssel des Nutzers oder Mittel zur Erzeugung der Hash-Werte auf einem anderen Medium, beispielsweise einem Terminal-Computersystem, zu speichern. Der Nutzer behält die vollständige Datenhoheit über seine Daten, insbesondere über seinen privaten Schlüssel.

Der Nutzer kann also eine abgeleitete Identität sowie die Signatur ohne Einschaltung eines weiteren Computersystems, beispielsweise eines ID-Provider-Computersystems, erzeugen. Insbesondere könnte der Nutzer selbst dann eine Signatur erzeugen, wenn keine Netzwerkverbindung zur Verfügung steht, so dass eine Erzeugung der Signatur autark aber ohne Einschränkung der Sicherheit erfolgen kann.

Da die Signatur vollständig auf dem ID-Token erzeugt wird, werden zudem sogenannte blinde Signaturen vermieden, bei denen die Signatur auf einem Terminal-Computersystem erzeugt. Der Nutzer behält stets die Hoheit darüber, welche Attributswerte übermittelt und signiert werden.

Durch die auf dem ID-Token gespeicherten Hash-Werte ist zudem der Signatur-Vorgang erleichtert. Nach dem Auslesen bzw. Senden der Attribute können mit Hilfe der Attributsspezifikation, die mit der Signaturanfrage übermittelt wird, die Hash-Werte der entsprechenden Attributswerte kombiniert werden und daraus ein Gesamt-Hash-Wert ermittelt werden.

Durch die Speicherung der Hash-Werte wird vermieden, dass während des Sendens der Attribute zeitgleich die Hash-Werte ermittelt werden müssen, wodurch ein erhöhter Rechenaufwand entstehen würde. Zudem wäre es erforderlich, auf dem ID-Token zu protokollieren, welche Attributswerte an das Terminal-Computersystem gesendet wurden, um eine Kombination der korrespondierenden Hash-Werte erzeugen zu können. Die Hash-Werte werden erfindungsgemäß erst nach dem Senden der Attributswerte und der anschließend Signaturanfrage kombiniert. Der Rechen- und Programmieraufwand ist dadurch deutlich geringer.

Unter einem "ID-Token" wird hier ein Dokument, insbesondere ein Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Ein "Attribut" ist ein Typ eines Datenwertes wie etwa ,Name', 'Straße', Telefonnummer' und dient als Platzhalter, der mit nutzerspezifischen Attributwerten belegt bzw. assoziiert werden kann.

Ein "Attributwert" dagegen ist ein konkreter, einem Nutzer zugeordneter Datenwert, der eine Eigenschaft der digitalen Identität des Nutzers im Hinblick auf ein bestimmtes Attribut angibt, beispielsweise dessen Name, Wohnort, Geburtsdatum oder eine den ID-Token selbst betreffende Information, wie zum Beispiel den Herausgeber des ID-Tokens, das Datum der Ausstellung des ID-Tokens oder die Gültigkeitsdauer des ID-Tokens.

Ein solcher Attributswert kann in den ID-Token anlässlich der Produktion des ID-Tokens durch eine Personalisierungsanlage gespeichert werden. Alternativ kann ein Attributswert nachträglich in den ID-Token geladen werden, nachdem ein Nutzer bereits den ID-Token in Benutzung genommen hat, wie es beispielsweise in DE 10 2015 200 313 derselben Anmelderin, deren Offenbarungsgehalt hiermit voll umfänglich durch Inbezugnahme zum Gegenstand der vorliegenden Patentanmeldung gemacht wird, offenbart ist.

Unter einer "abgeleiteten Identität" wird im Folgenden eine Menge aus einem oder mehreren Attributswerten eines Nutzers verstanden, wobei die Attributwerte bestimmte Eigenschaften des Nutzers oder eines mit dem Nutzer in Beziehung stehenden Sachverhalts angeben.

Unter einer "elektronischen Signatur" versteht man mit elektronischen Informationen verknüpfte Daten, mit denen man den Unterzeichner bzw. Signaturersteller identifizieren und die Integrität der signierten elektronischen Informationen prüfen kann. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten.

Unter einer "Attributsanforderung" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Hash-Wert" wird ein Wert verstanden, der aus einem Ursprungswert, beispielsweise einem Attributswert mit einem Hash-Algorithmus berechnet wurde. Die Eingangswerte können unterschiedliche Längen aufweisen. Die Hash-Werte haben üblicherweise eine feste, definierte Länge, so dass diese optimal von einer Signaturfunktion weiterverarbeitet werden können.

Ein Hash-Algorithmus ist eine Funktion, die aus einem Ursprungswert mit variabler Länge, beispielsweise einem Attributswert, einen Wert mit fester Länge, einen sogenannten Hash-Wert, berechnen kann. Ein solcher Hash-Algorithmus hat zudem folgende Eigenschaften: Die Berechnung des Ursprungswertes aus dem berechneten Wert soll praktisch unmöglich sein. Zudem sollen die berechneten Hash-Werte möglichst kollisionsresistent sein, das heißt, es soll praktisch unmöglich sein, verschiedene Ursprungswerte zu finden, für die der gleiche berechnete Hash-Wert ausgegeben wird.

Unter "Kombination der Hash-Werte" wird jede Möglichkeit verstanden, aus mehreren Hash-Werten einen neuen Wert zu erzeugen. Es ist nicht erforderlich, dass durch diese Kombination ein neuer Hash-Wert entsteht. Die Hash-Werte können beispielsweise kombiniert oder konkateniert werden.

Unter "Mittel zum Zuordnen der Hash-Werte" werden jegliche Mittel verstanden, die nach dem Senden der Signaturanforderung eine eindeutige Auswahl der zu den Attributswerten korrespondierenden Hash-Werten ermöglichen. Beispielsweise weisen die Attributswerte und die Hash-Werte eine Indexierung auf. Weitere Möglichkeiten für Mittel zur Zuordnung der Hash-Werte zu den Attributen werden nachfolgend erläutert.

Unter einer "Schnittstelle" wird hier eine Schnittstelle verstanden, über die Daten empfangen und gesendet werden können, wobei die Kommunikationsschnittstelle kontaktbehaftet oder kontaktlos ausgebildet sein kann, beispielsweise nach einem RFID- und/oder NFC-Standard.

Unter einem "Terminal-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Terminal-Computersystem hat eine Schnittstelle zur Verbindung mit dem ID-Token sowie optional zur Verbindung mit einem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden. Die Verbindung zwischen dem ID-Token und dem Terminal-Computersystem kann auch über das Netzwerk aufgebaut werden.

Das Terminal-Computersystem kann eine Attributsanforderung sowie eine Signaturanforderung erstellen und über die Verbindung an den ID-Token senden sowie Attributswerte und eine Signatur vom ID-Token empfangen. Insbesondere kann das Terminal-Computersystem aus den empfangenen Daten ein Zertifikat erstellen. Das Terminal-Computersystem kann beispielsweise ein eID-Provider-Computersystem sein.

Ein "eID-Provider-Computersystem" ist ein Datenverarbeitungssystem welches die Identität eines Nutzers gegenüber Dritten in automatisierter Form bestätigen oder verneinen kann. Ein "eID-Provider-Computersystem" befindet sich vorzugsweise in einer besonders geschützten Umgebung, insbesondere in einem so genannten Trust-Center, sodass die Bestätigung einer Identität eines Nutzers durch ein elD-Provider-Computersystem eine besonders hohe Verlässlichkeit aufweist.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Nach Ausführungsformen der Erfindung sind der erste Hash-Algorithmus und der zweite Hash-Algorithmus identisch. Der Rechenaufwand ist somit reduziert.

Der erste Hash-Algorithmus und der zweite Hash-Algorithmus können sich aber auch unterscheiden. Um die Signatur zu erzeugen bzw. zu prüfen, ist die Kenntnis beider Hash-Algorithmen erforderlich.

Die Speicherung der Hash-Werte auf dem ID-Token kann auf verschiedene Weise erfolgen. Es ist lediglich erforderlich, dass eine eindeutige Zuordnung der Hash-Werte zu den jeweiligen Attributswerten möglich ist. Vorzugsweise weisen der erste und der zweite Speicherbereich eine Verzeichnisstruktur auf, wobei die Verzeichnisstruktur des ersten Speicherbereichs und die Verzeichnisstruktur des zweiten Speicherbereichs übereinstimmen. Somit ist über die Verzeichnisstruktur bereits eine Zuordnung der Hash-Werte zu den Attributswerten möglich.

Die Verzeichnisstruktur kann beispielsweise record-orientiert sein.

Um Zuordnung zu erleichtern, kann den Attributen und den Hash-Werten jeweils eine eindeutige Indexierung zugeordnet sein, insbesondere ein File Identifier (FID) oder ein Short File Identifier (SFI), wobei die Indexierung der Attribute mit der Indexierung der Hash-Werte übereinstimmt.

Nach weiteren Ausführungsformen der Erfindung kann der Prozessor des ID-Tokens zur Erzeugung verschiedener Gesamt-Hash-Werte durch Ausführung eines von mehreren Hash-Algorithmen konfiguriert sein. Somit ist die Erzeugung verschiedener Signaturen, beispielsweise für verschiedene Dienste oder verschiedene Nutzer möglich.

In solchen Ausführungsformen sind vorzugsweise Mittel zur Auswahl des jeweils benötigten Hash-Algorithmus vorhanden. Beispielsweise kann bereits mit dem Senden der Attributsanforderung an den ID-Token eine Kennung gesendet werden, durch die der benötigte Hash-Algorithmus identifiziert wird. Die Auswahl des Hash-Algorithmus kann aber auch über die Auswahl der Attribute erfolgen. In solchen Ausführungsformen ist im ID-Token eine eindeutige Zuordnung der Hash-Algorithmen zu den Attributen hinterlegt. Es können auch für verschiedene Nutzer verschiedene Hash-Algorithmen gespeichert sein. In diesem Fall kann eine Auswahl des Hash-Algorithmus bereits durch die Registrierung und Authentifizierung des Nutzers erfolgen.

Zusätzlich kann zumindest ein dritter Speicherbereich vorgesehen ist, in dem Hash-Werte von Attributswerten gespeichert sind, die mit einem Hash-Algorithmus ermittelt wurden, der sich vom ersten Hash-Algorithmus unterscheidet. Für die Attributswerte können somit verschiedene Hash-Werte, beispielsweise für verschiedene Dienste, gespeichert sein. Somit ist eine Individualisierung auf verschiedene Dienste möglich, wobei vorzugsweise für jeden Dienst nur die Hash-Werte der Attributswerte hinterlegt werden, die für diesen Dienst benötigt werden. Ein Auslesen und Signieren von zusätzlichen Attributswerten, die ein Dienst nicht benötigt, ist somit ausgeschlossen, wodurch die Sicherheit der auf dem ID-Token gespeicherten Daten erhöht wird.

Nach Ausführungsformen der Erfindung ist der Prozessor zur Erzeugung von zumindest zwei verschiedenen Signaturen konfiguriert. Auf dem ID-Token können dazu beispielsweise verschiedene Hash-Algorithmen und/oder verschiedene private Schlüssel gespeichert sein, die jeweils verschiedenen Diensten zugeordnet sein können. Vorzugsweise sind Mittel zur Auswahl der jeweils benötigten Signatur vorgesehen. Die Mittel können beispielsweise nach einer Attributsanforderung und einer korrespondierenden Signaturanforderung die Erzeugung der jeweils benötigten Signatur initiieren. Die Auswahl der benötigten Signatur kann beispielsweise über eine in der Signaturanforderung enthaltene Kennung oder eine separate Abfrage nach Empfang der Signaturanforderung erfolgen.

Insbesondere ist es denkbar, dass verschiedene Signaturen für verschiedene Nutzer erzeugt werden können. In einer solchen Ausführungsform kann die Auswahl der Signatur und optional der verwendeten Hash-Algorithmen über eine vorherige Authentifizierung des Nutzers gegenüber dem ID-Token erfolgen, wobei jeweils nur die dem jeweiligen Nutzer zugeordneten Attribute und Hash-Werte freigegeben werden.

Vorzugsweise erfolgt beim Verbindungsaufbau des Terminal-Computersystems mit dem ID-Token eine Authentifizierung und Berechtigungsprüfung des Terminal-Computersystems gegenüber dem ID-Token. Ein Senden der Attribute bzw. der Signatur erfolgt nur nach erfolgreicher Authentifizierung und Berechtigungsprüfung.

Das Terminal-Computersystem kann ein ID-Provider-Computersystem sein. Zusätzlich kann ein Nutzer Computersystem vorgesehen sein, das eine Schnittstelle zur Kommunikation mit dem ID-Token aufweist. Das Verfahren weist in dieser Ausführungsform vorzugsweise folgende zusätzliche Schritte auf:
- Senden einer Dienstanfrage des Nutzers von dem Nutzer-Computersystem über ein Netzwerk an ein Dienst-Computersystem, das mit dem ID-Provider-Computersystem gekoppelt ist,
- Senden einer Attributsspezifikation vom Dienst-Computersystem an das ID-Provider-Computersystem über das Netzwerk, wobei die Attributsspezifikation diejenigen Attribute spezifiziert, die das Dienst-Computersystem zur Erbringung des mit der Dienstanforderung angeforderten Dienstes benötigt,
- Authentifizierung des Nutzers gegenüber dem ID-Token
- Authentifizierung des ID-Tokens gegenüber dem ID-Provider-Computersystem,
- Aufbau eines ersten gesicherten Übertragungskanals mit Ende-zu-Ende-Verschlüsselung zwischen dem ID-Token und dem ID-Provider-Computersystem über das Netzwerk,
- Durchführung eines ersten Lesezugriffs des ID-Provider-Computersystems auf den ID-Token zum Lesen der Attribute gemäß der ersten Attributspezifikation aus dem ID-Token,
- Übertragung einer in dem Speicherbereich des ID-Tokens gespeicherten Attribute von dem ID-Token an das ID-Provider-Computersystem über den ersten gesicherten Übertragungskanal,

Weitere, beispielsweise zu einem späteren Zeitpunkt benötigte Attribute können mit folgenden Schritten auf den ID-Token nachgeladen werden:
- Authentifizierung eines Attribut-Provider-Computersystems gegenüber dem ID-Token,
- Authentifizierung des ID-Tokens gegenüber dem Attribute-Provider-Computersystem,
- Aufbau eines zweiten gesicherten Übertragungskanals mit Ende-zu-Ende-Verschlüsselung zwischen dem Attribut-Provider-Computersystem und dem ID-Token,
- Durchführung eines Schreibzugriffs des Attribut-Provider-Computersystems über den gesicherten Übertragungskanal zum Speichern von Attributen in dem ID-Token,
- Speichern der Hash-Werte der Attribute, die mit dem ersten Hash-Algorithmus ermittelten wurden.

Unter einem "Attribut-Provider-Computersystem" wird hier ein Computersystem verstanden, welches dazu ausgebildet ist, eine Attributsspezifikation aus dem ID-Token eines Nutzers auszulesen und Attributswerte in den ID-Token zu schreiben.

Durch die Möglichkeit des Nachladens der Attribute ist eine flexiblere Verwendung des ID-Tokens möglich. So kann der ID-Token nachträglich zur Verwendung mit einem weiteren Dienst oder für einen weiteren Nutzer konfiguriert werden. Insbesondere können auch weitere Hash-Algorithmen, die für einen solchen Dienst oder einen Nutzer benötigt werden, nachgeladen werden. Der Prozessor kann auch nachträglich zur Erzeugung einer zweiten oder einer weiteren Signatur konfiguriert werden, beispielsweise, indem ein weiterer privater Schlüssel auf dem ID-Token gespeichert wird.

Vorzugsweise werden die Attributswerte vorab nachgeladen, so dass diese zu einem späteren Zeitpunkt für ein erfindungsgemäßes Verfahren zu Erzeugung einer elektronischen Signatur zur Verfügung stehen. Nicht auf dem ID-Token vorhandene Attributswerte können aber auch nach dem Senden der Attributsanforderung nachgeladen werden, wobei das Verfahren in solchen Ausführungsformen vorzugsweise folgende Schritte aufweist:
- nach dem Senden der Attributsanforderung und dem Empfang einer im Speicherbereich des ID-Tokens gespeicherten ersten Teilmenge der in der Attributsspezifikation spezifizierten Attribute von dem ID-Token an das ID-Provider-Computersystem wird eine zweite Attributspezifikation einer zweiten Teilmenge der Attribute der ersten Attributspezifikation, die diejenige Attribute spezifiziert, welche in der ersten Teilmenge nicht beinhaltet sind und nachgeladen werden sollen, erzeugt, an den ID-Token übertragen wird und auf diesem gespeichert wird,
- Aufbau eines zweiten gesicherten Übertragungskanals mit Ende-zu-Ende-Verschlüsselung zwischen dem Attribut-Provider-Computersystem und dem ID-Token,
- Übertragung der zweiten Attributspezifikation von dem ID-Token über den zweiten gesicherten Übertragungskanal an das Attribut-Provider-Computersystem,
- Durchführung eines zweiten Lesezugriffs des ID-Provider-Computersystems über den ersten gesicherten Übertragungskanal zum Lesen der von dem Attribut-Provider-Computersystem gemäß der zweiten Attributspezifikation in dem ID-Token gespeicherten Attribute,

Der Prozessor des ID-Tokens kann die Hash-Werte der Attributswerte beispielsweise selbst erzeugen. Dazu kann auf dem ID-Token der benötigte Hash-Algorithmus gespeichert sein und der Prozessor des ID-Tokens ist zur Erzeugung der Hash-Werte mit diesem Hash-Algorithmus konfiguriert. Um die Zuordnung der Hash-Werte zu den jeweiligen Attributswerte sicherzustellen, ist der Prozessor vorzugsweise konfiguriert, um die erzeugten Hash-Werte anschließend mit Mitteln zur Zuordnung der Hash-Werte zu den Attributswerten im Speicher zu speichern. Vorteilhaft an dieser Ausführungsform des Verfahrens ist, dass es nicht erforderlich ist, dass auf einem Computersystem, von dem die Attributswerte nachgeladen werden, den entsprechenden Hash-Algorithmus zu speichern. Es ist lediglich erforderlich, dass sich das Computersystem gegenüber dem ID-Token authentifizieren kann und eine Schreibberechtigung für den ID-Token erhält. Die Erzeugung der Hash-Werte erfolgt unabhängig von einem Computersystem. Dadurch kann der Nutzer stets die Kontrolle über seine Daten, insbesondere über Hash-Algorithmen, behalten, so dass eine erhöhte Sicherheit der erzeugten Signatur gewährleistet werden kann.

Alternativ ist es aber auch denkbar, dass die Hash-Werte vor dem Speichern der Attributswerte auf dem ID-Token erzeugt werden und gemeinsam mit den Attributswerten auf dem ID-Token gespeichert werden. Dadurch könnte der Rechenaufwand auf dem ID-Token reduziert werden.

Im Weiteren werden Ausführungsformen der Erfindung mit Bezugnahme auf die Zeichnungen erläutert. In diesen zeigen:
- Figur 1: eine schematische Darstellung einer ersten Ausführungsform eines Systems mit einem ID-Token;

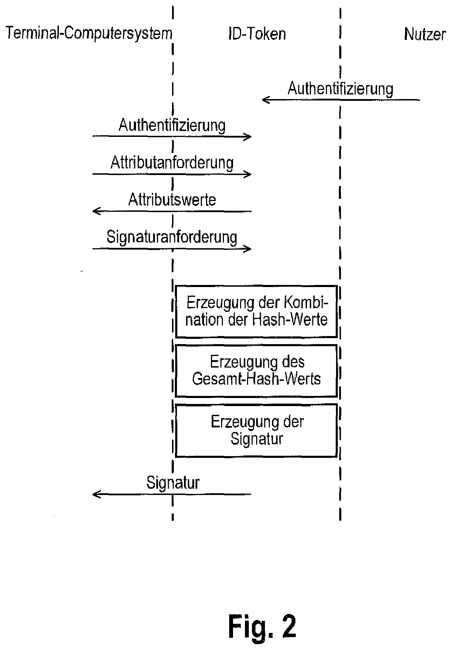

- Figur 2: ein Flussdiagramm eines Verfahrens zur Erzeugung einer elektronischen Signatur;
- Figur 3: eine zweite Ausführungsform eines Systems mit einem ID-Token;
- Figur 4: eine dritte Ausführungsform eines Systems mit einem ID-Token; und

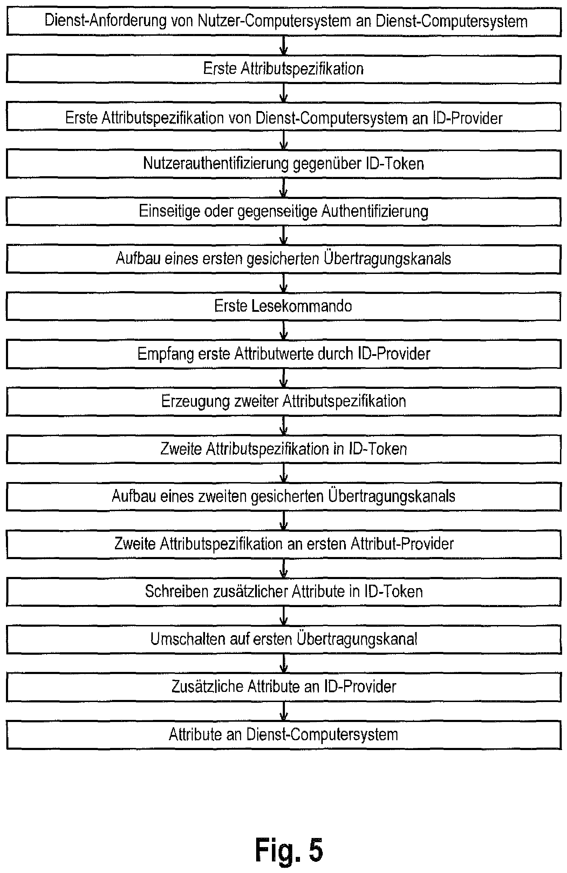

- Figur 5: ein Flussdiagram zum Nachladen von Attributen auf den ID-Token des Systems aus Figur 4.

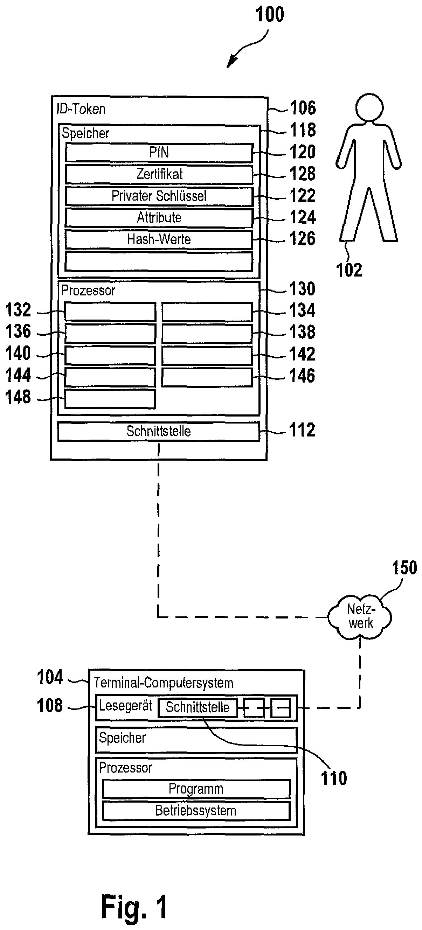

Die Figur 1 zeigt ein System 100 eines Nutzers 102 mit einem Terminal-Computersystem 104 und einem ID-Token 106. Bei dem Terminal-Computersystem 104 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Terminal-Computersystem 100 hat ein Lesegerät 108 mit einer Schnittstelle 110 zur Kommunikation mit einem ID-Token 106, der eine entsprechende Schnittstelle 112 aufweist.

Der ID-Token 106 hat einen elektronischen Speicher 118 mit geschützten Speicherbereichen 120, 122, 124 und 126.

Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers 102 gegenüber dem ID-Token 106 verwendet werden kann.

Der geschützte Speicherbereich 122 dient zur Speicherung eines privaten Schlüssels des Nutzers 102. Der geschützte Speicherbereich 124 dient zur Speicherung von Attributswerten, zum Beispiel des Nutzers 102, wie zum Beispiel dessen Name, Wohnort, Geburtsdatum, Geschlecht, und/oder von Attributen, die den ID-Token 106 selbst betreffen, wie zum Beispiel die Institution, die den ID-Token 106 erstellt oder ausgegeben hat, die Gültigkeitsdauer des ID-Tokens 106, einen Identifikator des ID-Tokens 106, wie zum Beispiel eine Passnummer oder eine Kreditkartennummer.

Der Speicherbereich 126 dient zur Speicherung von Hash-Werten, die aus den Attributswerten mit einem Hash-Algorithmus erzeugt werden. Die Hash-Werte sind derart im Speicherbereich gespeichert, dass eine eindeutige Zuordnung der Hash-Werte zu den Attributswerten möglich ist.

Beispielsweise weisen sowohl der Speicherbereich 124 wie auch der Speicherbereich 126 die gleiche Verzeichnisstruktur auf. Die Speicherbereiche 124, 126 weisen beispielsweise eine Verzeichnisstruktur mit einem Masterfile (MF) sowie mehreren Dedicated Files (DF) bzw. Elementary Files (EF) auf.

Um eine eindeutige Zuordnung der Hash-Werte zu den Attributswerten sicherzustellen, können die Hash-Werte und die Attributswerte eine Indexierung aufweisen, wobei die Attributswerte und die zugehörigen Hash-Werte jeweils korrespondierende Indexe haben. Die Indexe können beispielsweise File Identifier (FID) oder Short FID (SFI) sein.

Die Hash-Werte sind mit einem ersten Hash-Algorithmus erzeugt. Der erste Hash-algorithmus kann auf dem ID-Token 106 gespeichert sein und die Hash-Werte wurden nach dem Speichern der Attributswerte durch den ID-Token 106 ermittelt und im Speicherbereich 126 gespeichert. Alternativ können die Hash-Werte vorab ermittelt und in den Speicherbereich 126 kopiert werden.

Der elektronische Speicher 118 kann ferner einen Speicherbereich 128 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Der ID-Token 106 hat einen Prozessor 130. Der Prozessor 130 dient zur Ausführung von Programminstruktionen 132, 134, 136, 138 und 140.

Die Programminstruktionen 132 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung ein, beispielsweise in das Terminal-Computersystem 104. Durch Ausführung der Programminstruktionen 132 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Die Authentifizierung des Nutzers gegenüber dem ID-Token kann auch mittels einer "Fernüberprüfung" erfolgen, worunter hier jedes Verfahren verstanden wird, bei dem die zu überprüfende PIN nicht in den ID-Token unmittelbar eingegeben wird, um sie mit dem dort gespeicherten Referenzwert auf Übereinstimmung zu prüfen, sondern bei dem die Überprüfung mittels eines das Lesegerät und den ID-Token involvierenden Protokolls erfolgt, bei dem die PIN, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1. Vorzugsweise authentifiziert sich neben dem Nutzer auch das Lesegerät 101 gegenüber dem ID-Token 106, wobei auch ein gesicherter Übertragungskanal, das heißt ein sogenannter Secure Messaging-Kanal, zwischen dem ID-Token und dem Lesegerät aufgebaut werden kann, beispielsweise indem ein Session Key nach einem Diffie-Hellman-Protokoll zwischen dem ID-Token und dem Lesegerät vereinbart wird.

In analoger Art und Weise authentifiziert sich der Nutzer 102 auch gegenüber seinem Sicherheitstoken 156, indem er in das Lesegerät 158 bzw. das Nutzer-Computersystem 100 seine zweite PIN eingibt, die von dem Sicherheitstoken 156 verifiziert wird.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Terminal-Computersystem 104 angeschlossen. Die von dem Nutzer 102 erfassten biometrischen Daten werden durch Ausführung der Programminstruktionen 132 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung des Terminal-Computersystems 104 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das Terminal -Computersystem 104 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem Terminal-Computersystem 104 nach demselben oder einem anderen kryptographischen Protokoll authentifizieren.

Die Programminstruktionen 136 dienen zur Ende-zu-Ende-Verschlüsselung von zwischen dem ID-Token 106 und dem Terminal-Computersystem 104 übertragenen Daten, zumindest aber der von dem Terminal-Computersystem 104 aus dem geschützten Speicherbereich 124 ausgelesenen Attributswerte. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem Terminal-Computersystem 104 vereinbart wird.

Alternativ zu der in der Figur 1 dargestellten Ausführungsform kann das Terminal-Computersystem 100 mit seiner Schnittstelle 110 nicht unmittelbar mit der Schnittstelle 112 kommunizieren, sondern über ein an die Schnittstelle 110 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Nach erfolgreicher Authentifizierung des Terminal-Computersystems 104 kann das Terminal-Computersystem 104 eine Attributsanforderung 152 an den ID-Token senden. Die Attributsanforderung 152 spezifiziert mehrere Attribute, die beispielsweise zur Durchführung eines Dienstes erforderlich sind.

Nach Empfang der Attributsanforderung 152 sendet der ID-Token 106 die in der Attributsanforderung 152 spezifizierten Attribute an das Terminal-Computersystem.

Anschließend sendet das Terminal-Computersystem 104 eine Signaturanforderung für die empfangenen Attribute an den ID-Token. Die Signaturanforderung enthält eine Spezifikation der an das Terminal-Computersystem 104 übermittelten Attribute.

Nach Empfang der Signaturanfrage wird mit den Programminstruktionen 138 eine Kombination der Hash-Werte der gesendeten Attribute erzeugt. Die Kombination der Hash-Werte kann durch Konkatenieren, Kombinieren oder eine andere geeignete Kombinationsmöglichkeit erzeugt werden.

Abschließend wird durch Programminstruktionen 140 mit einem zweiten Hash-Algorithmus aus der Kombination der Hash-Werte ein Gesamt-Hash-Wert ermittelt.

Aus diesem Gesamt-Hash-Wert wird mit dem im Speicherbereich 122 gespeicherten privaten Schlüssel des Nutzers eine Signatur erstellt, indem der Gesamt-Hashwert mit dem privaten Schlüssel verschlüsselt wird. Diese Signatur wird an das Terminal-Computersystem 104 gesendet.

Um die Echtheit der übermittelten Attribute zu verifizieren, können auf dem Terminal-Computersystem aus den empfangenen Attributen mit dem ersten Hash-Algorithmus die Hash-Werte der Attribute ermittelt werden. Anschließend wird mit gleichen Verfahren, das auch auf dem ID-Token verwendet wird, eine Kombination der Hash-Werte erzeugt und aus dieser Kombination mit dem zweiten Hash-Algorithmus ein Gesamt-Hash-Wert ermittelt. Dieser Gesamt-Hash-Wert muss mit dem Gesamt-Hash-Wert, der aus der gesendeten Signatur mit dem öffentlichen Schlüssel des Nutzers 102 erzeugt wurde, übereinstimmen.

Das beschriebene Verfahren hat den Vorteil, dass der Nutzer 102 die Kontrolle über die zu signierenden Daten behält. Eine blinde Signatur, bei der lediglich die von einem Computersystem an den ID-Token 106 gesendeten Hash-Werte signiert werden, wird so vermieden. Da die Erzeugung der Signatur vollständig durch den ID-Token 106 erfolgt, sind zudem keine weiteren Mittel oder Systeme zur Erzeugung der Signatur erforderlich. Somit ist zudem die größtmögliche Unabhängigkeit für den Nutzer sichergestellt.

Der erste und der zweite Hash-Algorithmus können übereinstimmen, so dass auf dem ID-Token nur ein Hash-Algorithmus gespeichert werden muss. Es ist aber auch denkbar, dass zwei verschiedene Hash-Algorithmen verwendet werden.

Um die Flexibilität des ID-Tokens zu erhöhen, beispielsweise, um Signaturen für verschiedene Dienste zu erzeugen, kann der Prozessor auch zur Erzeugung mehrerer unterschiedlicher Hash-Werte und/oder Gesamt-Hash-Werte mit unterschiedlichen Hash-Algorithmen konfiguriert sein. Es ist auch denkbar, dass die Kombination der Hash-Werte für verschiedene Dienste auf unterschiedliche Weise erzeugt wird.

Des Weiteren können auf dem ID-Token 106 mehrere private Schlüssel gespeichert sein, beispielsweise für verschiedene Nutzer oder verschiedene Dienste.

Beispielsweise wird mit der Attributsanforderung 152 und der Signaturanforderung eine Kennung gesendet, welche Hash-Algorithmen und/oder welcher private Schlüssel zur Erzeugung der Signatur verwendet werden soll. Alternativ wird durch der private Schlüssel und/oder die verwendeten Hash-Algorithmen durch die Nutzerauthentifizierung am ID-Token festgelegt.

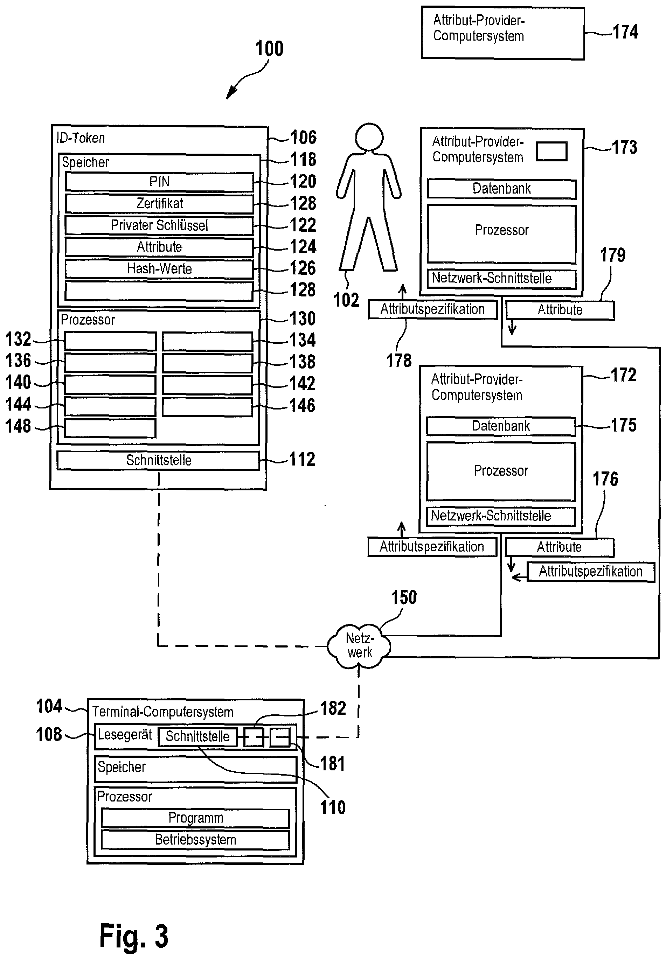

Je nach Anwendungsfall kann es vorkommen, dass zunächst nicht alle mit der Attributsanforderung 152 spezifizierten Attribute auf dem ID-Token vorhanden sind. Um Attribute nachzuladen, kann das in der Figur 1 gezeigte System ein oder mehrere Attribut-Provider-Computersysteme 172, 173, 174, ... aufweisen (siehe Figur 3). Diese können prinzipiell gleich aufgebaut sein wie ein ID-Provider-Computersystem und verfügen über zusätzliche Funktionalitäten zum Lesen oder Generieren von Attributen sowie zum Schreiben von Attributen und erforderlichenfalls Attributspezifikationen in den ID-Token 106.

Zum Nachladen von Attributen auf den ID-Token 106 wird beispielsweise wie folgt vorgegangen:
1. Das Terminal-Computersystem 104 baut eine weitere Verbindung über das Netzwerk 150 mit dem Attribut-Provider-Computersystem 172 auf. Das Attribut-Provider-Computersystem 172 authentifiziert sich dann gegenüber dem ID-Token 106, wobei vorzugsweise eine gegenseitige Authentifizierung durchgeführt wird. Hierbei wird ein zweiter gesicherter Übertragungskanal mit Ende-zu-Ende-Verschlüsselung mit einem Session Key zwischen dem ID-Token 106 und dem Attribut-Provider-Computersystem 172 über das Netzwerk 150 und das Nutzer-Computersystem 100 aufgebaut, wobei der erste gesicherte Übertragungskanal bestehen bleibt.
   Der Prozessor 130 dient zur Ausführung von Programminstruktionen 142 für die Kanalumschaltung, das heißt die Auswahl einer der gesicherten Übertragungskanäle, das heißt hier des ersten oder des zweiten gesicherten Übertragungskanals, für die externe Kommunikation. Aufgrund des Aufbaus des zweiten gesicherten Übertragungskanals wird durch Ausführung der Programminstruktionen 142 der zweite gesicherte Übertragungskanal von dem Prozessor 130 ausgewählt, über den der ID-Token 106 dann die zweite Attributspezifikation 144 an das Attribut-Provider-Computersystem 172 sendet.
2. Das Attribut-Provider-Computersystem 172 führt daraufhin einen Zugriff auf seine Datenbank 175 durch, um vorab spezifizierte Attribute, beispielsweise gemäß einer zweiten Attributspezifikation zu lesen. Das Attribut-Provider-Computersystem 172 sendet anschließend die angeforderten Attribute über den zweiten gesicherten Übertragungskanal an den ID-Token 106, welcher die Attribute in seinem elektronischen Speicher 118 speichert.
3. Abschließend werden die Hash-Werte der Attributswerte mit dem ersten Hash-Algorithmus erzeugt und auf ID-Token 106 gespeichert. Die Hash-Werte können vom Attribut-Provider-Computersystem 172 erzeugt werden, vom Terminal-Computersystem 104 oder durch den Prozessor des ID-Tokens 106.

Das Nachladen von Attributen bzw. Attributswerten kann unabhängig von einer Attributsanforderung 152 erfolgen Es ist aber auch möglich, dass nicht alle in einer Attributsanforderung 152 spezifizierten Attributswerte auf dem ID-Token gespeichert sind und diese nachgeladen werden müssen, um die Signatur zu erzeugen.

In diesem Fall kann der ID-Token oder das Terminal-Computersystem eine zweite Attributspezifikation erzeugen, welche die noch fehlenden Attribute spezifiziert, das heißt diejenigen der Attributspezifikation spezifizierten Attribute, die nicht an das Terminal-Computersystem gesendet wurden. Die zweite Attributspezifikation wird auf dem ID-Token 106 gespeichert und kann bei Speicherung in dem nicht-flüchtigen oder flüchtigen Speicher eine bereits vorhandene Attributspezifikation ersetzen. Die Speicherung kann beispielsweise in einem flüchtigen Speicher des IT-Tokens 106 erfolgen.

Das Terminal-Computersystem 100 baut anschließend eine weitere Internetsession über das Netzwerk 116 mit dem Attribut-Provider-Computersystem 172 auf, wobei auf die oben geschriebenen Weise Attribute auf den ID-Token 106 nachgeladen werden.

Für den Fall, dass das Attribut-Provider-Computersystem 172 nicht auf sämtliche gemäß der zweiten Attributspezifikation 111 erforderlichen Attribute zugreifen kann, beispielsweise weil diese nicht sämtlich in der Datenbank 175 gespeichert sind, kann der oben genannte Vorgang iterativ unter Verwendung der weiteren Attribut-Provider-Computersysteme 173, 174, ... durchgeführt werden, und zwar so lange, bis sämtliche der Attribute gemäß der ursprünglichen Attributspezifikation in dem Speicher 118 vorliegen oder eine andere Abbruchbedingung erreicht ist.

Falls das Attribut-Provider-Computersystem 172 nicht sämtliche der Attribute gemäß der zweiten Attributspezifikation 111 ermitteln kann, so generiert das Attribut-Provider-Computersystem 172 eine dritte Attributspezifikation 178. Diese dritte Attributspezifikation 178 wird von dem Attribut-Provider-Computersystem 172 über den zweiten gesicherten Übertragungskanal zu dem ID-Token 106 übertragen und ersetzt oder aktualisiert die in dem Speicher gespeicherte zweite Attributspezifikation 111.

Anschließend wird ein dritter gesicherter Übertragungskanal zu dem Attribut-Provider-Computersystem 173 aufgebaut, welches die dritte Attributspezifikation 178 aus dem ID-Token 106 ausliest und darauf mit einer Antwort 179 antwortet, die die noch fehlenden Attribute gemäß der dritten Attributspezifikation 178 beinhaltet. Diese Antwort 179 wird über den dritten gesicherten Übertragungskanal von dem Attribut-Provider-Computersystem 173 an den ID-Token 106 übertragen und in dem Speicher 118 gespeichert.

Durch Ausführung der Programminstruktionen 142 wird dann wiederum auf den ersten gesicherten Übertragungskanal zurückgeschaltet, sodass aufgrund des zweiten Lesekommandos 177 in diesem Fall sowohl die Antwort 176 als auch die Antwort 179, die insgesamt die Attribute beinhalten, an den ID-Token 106 übertragen werden.

Falls seitens des Attribut-Provider-Computersystems 173 nicht sämtliche der Attribute gemäß der dritten Attributspezifikation 178 verfügbar sind, kann in analoger Art und Weise iterativ weiterverfahren werden, indem ein oder mehrere weitere Attribut-Provider-Computersysteme, wie zum Beispiel das Attribut-Provider-Computersystem 174, in den Ablauf eingebunden werden.

Der ID-Token 106 verfügt nach einer erfolgreichen Durchführung der oben genannten Verfahrensschritte in seinem Speicher 118 über sämtliche der Attributswerte, die mit der ursprünglichen Attributanforderung angefordert worden sind.

Nach dem Speichern der Attributswerte werden jeweils die Hash-Werte der Attributswerte auf dem ID-Token 106 gespeichert.

Anschließend kann auf die oben beschriebene Weise die Signatur zu den gesendeten Attributen erzeugt werden, indem eine Kombination der Hash-Werte der angeforderten Attributswerte erzeugt wird, aus dieser Kombination ein Gesamt-Hash-Wert erzeugt wird, aus dem mit dem privaten Schlüssel des Nutzers die Signatur erzeugt wird.

Es ist lediglich erforderlich, dass vor dem Erzeugen der Kombination der Hash-Werte sowie des Gesamt-Hash-Wertes alle Hash-Werte der angeforderten Attributswerte auf dem ID-Token gespeichert sind.

Die Attribut-Provider-Computersysteme 172, 173, 174 ... können analog zu einem ID-Provider-Computersystem aufgebaut sein, das heißt sie verfügen jeweils über eine Netzwerk-Schnittstelle, einen Prozessor zur Ausführung von Programminstruktionen und einen Speicher, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 106 spezifiziert ist.

Nach einer Ausführungsform der Erfindung werden die Attribute erst in dem Speicher 118 des ID-Tokens gespeichert, nachdem diese der Nutzer 102 zur Kenntnis nehmen konnte. Hierzu werden diese Attribute auf einem Display 181 angezeigt, welches zum Beispiel zu dem Lesegerät 108 gehört. Ferner kann beispielsweise auf dem Lesegerät 108 ein Bedienelement 182 vorhanden sein, über welches der Nutzer 102 eine Eingabe tätigen muss, um die Speicherung der in den Antworten 176 bzw. 179 beinhalteten Attribute in dem Speicher 118 zu genehmigen. Hierdurch erhält der Nutzer 102 eine Kontrollmöglichkeit bezüglich der möglicherweise seine Person betreffenden zusätzlichen Attribute in dem Speicher 118.

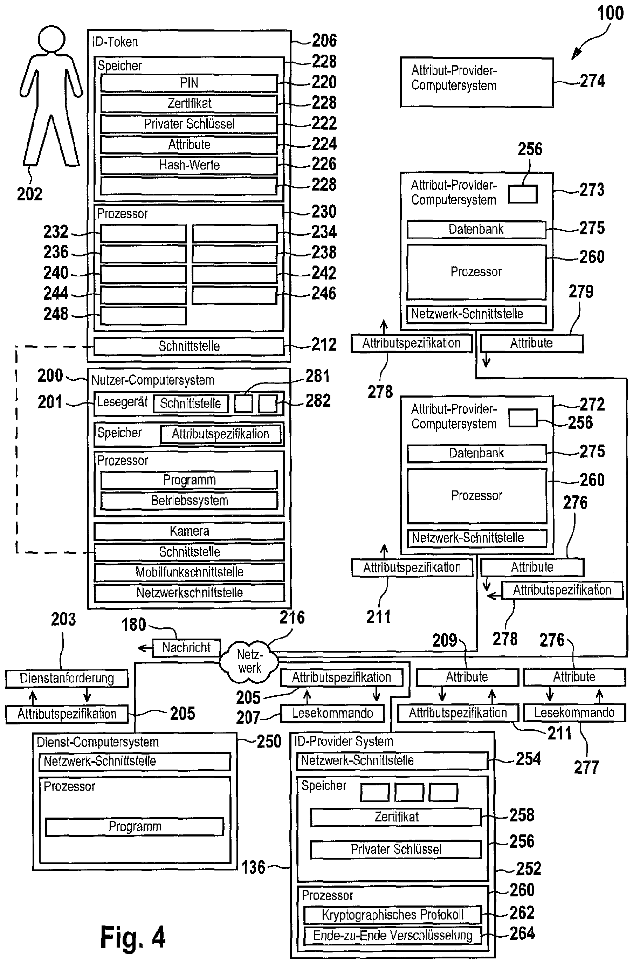

Die Auswahl des Attribut-Provider-Systems 172 kann optional auch durch den Nutzer 102 erfolgen. Auf eine solche explizite Auswahl kann auch verzichtet werden, wenn das Nutzer-Computersystem 100 das zu kontaktierende Attribut-Provider-Computersystem bereits kennt, beispielsweise wenn der Nutzer 102 vorab mit der Lieferung von Attributen durch das Attribut-Provider-Computersystem 172 sein Einverständnis erklärt hat.
Statt dem in Figur 3 gezeigten System mit einem Terminal-Computersystem ist auch eine Verwendung des in Figur 4 gezeigten Systems mit einem Nutzer-Computersystem, einem Dienst-Computersystem sowie einem ID-Provider-Computersystem denkbar.

Zur Inanspruchnahme eines von dem Dienst-Computersystem zur Verfügung gestellten Dienstes wird beispielsweise wie folgt vorgegangen:
a) Der Nutzer 202 baut mithilfe seines Nutzer-Computersystems 200 eine Internetsession über das Netzwerk 216 zu dem Dienst-Computersystem 250 auf. Über diese Internetsession wird eine Dienstanforderung 203 von dem Nutzer-Computersystem 200 an das Dienst-Computersystem 250 übertragen, womit der Nutzer 202 die Erbringung eines Dienstes des Dienst-Computersystems 250 anfordert. Das Dienst-Computersystem 250 antwortet auf diese Dienstanforderung 203 mit einer ersten Attributspezifikation 205, die diejenigen Attribute spezifiziert, die für die Erbringung des mit der Dienstanforderung 203 angeforderten Dienstes zu erfüllen sind. Diese erste Attributspezifikation spezifiziert beispielsweise eine Anzahl von M Attributen A1, A2, A3, ... AM.
b) Beispielsweise wird die Attributspezifikation 205 in einem Speicher 283 des Nutzer-Computersystems 200 zwischengespeichert. Aufgrund des Empfangs der Attributspezifikation 205 durch das Nutzer-Computersystem 200 wird der Nutzer 202 dazu aufgefordert, sich gegenüber dem ID-Token 206 zu authentifizieren. Hierzu gibt der Nutzer 202 seine PIN zum Beispiel über das Lesegerät 201 oder eine Tastatur des Nutzer-Computersystems 200 ein. Ferner baut das Nutzer-Computersystem 200 zu dem ID-Provider-Computersystem 236 eine weitere Internetsession über das Netzwerk 216 auf, über die sich das ID-Provider-Computersystem 236 gegenüber dem Nutzer-Computersystem 200 authentifiziert, und zwar unter Verwendung des Zertifikats 244.
   Vorzugsweise erfolgt eine gegenseitige Authentifizierung des IT-Tokens 206 und des ID-Provider-Computersystems 236 bzw. des jeweiligen Attribut-Provider-Computersystems unter Verwendung der Zertifikate 226 und 244, das heißt eine sogenannte CA und eine TA. Hierbei wird auch ein Session Key vereinbart, mit dem der erste gesicherte Übertragungskanal mit Ende-zu-Ende-Verschlüsselung zwischen dem ID-Token 206 und dem ID-Provider-Computersystem über das Nutzer-Computersystem 200 und das Netzwerk 216 aufgebaut wird. Ferner leitet das Nutzer-Computersystem 200 die Attributspezifikation 205 über die mit dem ID-Provider-Computersystem 236 bestehende Session an das ID-Provider-Computersystem 236 weiter.
c) Das ID-Provider-Computersystem 236 antwortet auf die erste Attributspezifikation 205 mit einem Lesekommando 207 zum Lesen der in der ersten Attributspezifikation spezifizierten Attribute. Dieses Lesekommando 207 wird über den ersten gesicherten Übertragungskanal mit Ende-zu-Ende-Verschlüsselung von dem ID-Provider-Computersystem 236 an den ID-Token 206 übertragen. Der Prozessor 228 greift daraufhin auf den elektronischen Speicher 218 zu, um die Attribute gemäß der ersten Attributspezifikation 205 auszulesen. Im Weiteren wird ohne Beschränkung der Allgemeinheit davon ausgegangen, dass von den M Attributen gemäß der ersten Attributspezifikation 205 nur P Attribute A1, A2, A3, ..., AP vorhanden sind, wobei P < M. Auf das Lesekommando 207 antwortet der ID-Token 206 mit der Antwort 209, die die erste Teilmenge der in der ersten Attributspezifikation 205 spezifizierten Attribute, nämlich die Attribute A1, A2, A3, ..., AP beinhaltet. Die Antwort 209 wird über den ersten gesicherten Übertragungskanal von dem ID-Token 206 an das ID-Provider-Computersystem 236 übertragen.
d) Das ID-Provider-Computersystem 236 speichert die Antwort 209 mit der ersten Teilmenge der Attribute in seinem Speicher 240 und erzeugt eine zweite Attributspezifikation 211, welche die noch fehlenden Attribute spezifiziert, das heißt diejenigen der ersten Attributspezifikation 205 spezifizierten Attribute, die in der Antwort 209 nicht beinhaltet sind, das heißt hier die Attribute AP+1 bis AM. Die zweite Attributspezifikation 211 wird über den ersten gesicherten Übertragungskanal von dem ID-Provider-Computersystem 236 zu dem ID-Token 206 übertragen und dort gespeichert und kann bei Speicherung in dem nicht-flüchtigen oder flüchtigen Speicher eine bereits vorhandene Attributspezifikation ersetzen. Die Speicherung kann beispielsweise in einem flüchtigen Speicher 213 des IT-Tokens 206 erfolgen.
e) Das Nutzer-Computersystem 200 baut eine weitere Internetsession über das Netzwerk 216 mit dem Attribut-Provider-Computersystem 272 auf. Das Attribut-Provider-Computersystem 272 authentifiziert sich dann gegenüber dem ID-Token 206, wobei vorzugsweise eine gegenseitige Authentifizierung, das heißt eine CA und eine TA, durchgeführt werden. Hierbei wird ein zweiter gesicherter Übertragungskanal mit Ende-zu-Ende-Verschlüsselung mit einem Session Key zwischen dem ID-Token 206 und dem Attribut-Provider-Computersystem 272 über das Netzwerk 216 und das Nutzer-Computersystem 200 aufgebaut, wobei der erste gesicherte Übertragungskanal bestehen bleibt.
   Der Prozessor 228 dient zur Ausführung von Programminstruktionen 231 für die Kanalumschaltung, das heißt die Auswahl einer der gesicherten Übertragungskanäle, das heißt hier des ersten oder des zweiten gesicherten Übertragungskanals, für die externe Kommunikation. Aufgrund des Aufbaus des zweiten gesicherten Übertragungskanals wird durch Ausführung der Programminstruktionen 231 der zweite gesicherte Übertragungskanal von dem Prozessor 228 ausgewählt, über den der ID-Token 206 dann die zweite Attributspezifikation 211 an das Attribut-Provider-Computersystem 272 sendet.
f) Das Attribut-Provider-Computersystem 272 führt daraufhin einen Zugriff auf seine Datenbank 275 durch, um die Attribute gemäß der zweiten Attributspezifikation 211 zu lesen. Das Attribut-Provider-Computersystem 272 antwortet dann auf die Attributspezifikation 211 mit seiner Antwort 276, die die aus der Datenbank 275 gelesenen Attribute beinhaltet und sendet diese Antwort 276 über den zweiten gesicherten Übertragungskanal an den ID-Token 206, welcher die Antwort 276 mit diese Attributen mit seinem elektronischen Speicher 218 speichert.
g) Durch Ausführung der Programminstruktionen 231 schaltet der ID-Token 206 dann auf den ersten gesicherten Übertragungskanal zurück. Das ID-Provider-Computersystem 236 greift dann durch ein zweites Lesekommando 277 über den ersten gesicherten Übertragungskanal auf den ID-Token 206 zu und erhält als Antwort darauf von dem ID-Token 206 die Antwort 276 aus dem Speicher 218 mit den noch fehlenden Attributen.

Für den Fall, dass das Attribut-Provider-Computersystem 272 nicht auf sämtliche gemäß der zweiten Attributspezifikation 211 erforderlichen Attribute zugreifen kann, beispielsweise weil diese nicht sämtlich in der Datenbank 275 gespeichert sind, kann der oben genannte Vorgang iterativ unter Verwendung der weiteren Attribut-Provider-Computersysteme 273, 274, ... durchgeführt werden, und zwar so lange, bis sämtliche der Attribute gemäß der ersten Attributspezifikation 205 in dem Speicher 218 vorliegen oder eine andere Abbruchbedingung erreicht ist.

Falls das Attribut-Provider-Computersystem 272 nicht sämtliche der Attribute gemäß der zweiten Attributspezifikation 211 ermitteln kann, so generiert das Attribut-Provider-Computersystem 272 eine dritte Attributspezifikation 278. Wenn beispielsweise die Antwort 276 die Attribute AP+1 bis AQ beinhaltet mit Q < M, so werden in der dritten Attributspezifikation 278 die noch fehlenden Attribute AQ+1 bis AM spezifiziert. Diese dritte Attributspezifikation 278 wird von dem Attribut-Provider-Computersystem 272 über den zweiten gesicherten Übertragungskanal zu dem ID-Token 206 übertragen und ersetzt oder aktualisiert die in dem Speicher 213 gespeicherte zweite Attributspezifikation 211.

Anschließend wird dann nach vorheriger CA und TA ein dritter gesicherter Übertragungskanal zu dem Attribut-Provider-Computersystem 273 aufgebaut, welches die dritte Attributspezifikation 278 aus dem ID-Token 206 ausliest und darauf mit einer Antwort 279 antwortet, die die noch fehlenden Attribute gemäß der dritten Attributspezifikation 278 beinhaltet. Diese Antwort 279 wird über den dritten gesicherten Übertragungskanal von dem Attribut-Provider-Computersystem 273 an den ID-Token 206 übertragen und in dem Speicher 218 gespeichert.

Durch Ausführung der Programminstruktionen 231 wird dann wiederum auf den ersten gesicherten Übertragungskanal zurückgeschaltet, sodass aufgrund des zweiten Lesekommandos 277 in diesem Fall sowohl die Antwort 276 als auch die Antwort 279, die insgesamt die Attribute AP+1 bis AM beinhalten, an das ID-Provider-Computersystem 236 übertragen werden.

Falls seitens des Attribut-Provider-Computersystems 273 nicht sämtliche der Attribute gemäß der dritten Attributspezifikation 278 verfügbar sind, kann in analoger Art und Weise iterativ weiterverfahren werden, indem ein oder mehrere weitere Attribut-Provider-Computersysteme, wie zum Beispiel das Attribut-Provider-Computersystem 274, in den Ablauf eingebunden werden.

Das ID-Provider-Computersystem 236 verfügt nach einer erfolgreichen Durchführung der oben genannten Verfahrensschritte in seinem Speicher 240 über sämtliche der Attribute, die mit der ersten Attributspezifikation 205 angefordert worden sind. Das ID-Provider-Computersystem 236 generiert daraufhin eine Nachricht 280, die diese Attribute A1 bis AM beinhaltet, signiert diese Nachricht und sendet sie über das Netzwerk 216 an das Dienst-Computersystem 250, wobei dies über das Nutzer-Computersystem 200 erfolgen kann. Das Dienst-Computersystem 250 kann dann gegebenenfalls mithilfe der in der Nachricht 280 beinhalteten Attribute den mit der Dienstanforderung 203 angeforderten Dienst erbringen.

Die Attribut-Provider-Computersysteme 272, 273, 274 ... können analog zu dem ID-Provider-Computersystem 236 aufgebaut sein, das heißt sie verfügen jeweils über eine Netzwerk-Schnittstelle 238, einen Prozessor 245 zur Ausführung von Programminstruktionen 246, 248 und einen Speicher 240, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 206 spezifiziert ist.

Nach einer Ausführungsform der Erfindung werden die in der Antwort 276 bzw. 279 beinhalteten Attribute erst dann in dem Speicher 218 gespeichert, nachdem diese der Nutzer 202 zur Kenntnis nehmen konnte. Hierzu werden diese Attribute auf einem Display 281 angezeigt, welches zum Beispiel zu dem Lesegerät 201 gehört. Ferner kann beispielsweise auf dem Lesegerät 201 ein Bedienelement 282 vorhanden sein, über welches der Nutzer 202 eine Eingabe tätigen muss, um die Speicherung der in den Antworten 276 bzw. 279 beinhalteten Attribute in dem Speicher 218 zu genehmigen. Hierdurch erhält der Nutzer 202 eine Kontrollmöglichkeit bezüglich der möglicherweise seine Person betreffenden zusätzlichen Attribute in dem Speicher 218.

Die Hash-Werte können auf die oben beschriebene Weise auf dem ID-Token erzeugt oder von einem der beteiligten Computersysteme erzeugt und auf dem ID-Token gespeichert werden.

Anschließend kann auf die oben beschriebene Weise der Gesamt-Hash-Wert erzeugt und an das ID-Provider-Computersystem bzw. das Dienst-Computersystem übertragen werden.

### Bezugszeichenliste

- 100: System
- 102: Nutzer
- 104: Terminal-Computersystem
- 106: ID-Token
- 108: Lesegerät
- 110: Schnittstelle
- 112: Schnittstelle
- 118: Speicher
- 120: Speicherbereich
- 122: Speicherbereich
- 124: Speicherbereich
- 126: Speicherbereich
- 128: Speicherbereich
- 130: Prozessor
- 132: Programminstruktionen
- 134: Programminstruktionen
- 136: Programminstruktionen
- 138: Programminstruktionen
- 140: Programm instruktionen
- 142: Programminstruktionen
- 144: Programminstruktionen
- 146: Programminstruktionen
- 148: Programminstruktionen
- 150: Netzwerk
- 172: Attribut-Provider-Computersystem
- 173: Attribut-Provider-Computersystem
- 174: Attribut-Provider-Computersystem
- 175: Datenbank
- 176: Antwort
- 177: Lesekommandos
- 178: Attributspezifikation
- 179: Antwort
- 181: Display
- 182: Bedienelement

## Patentansprüche

1. ID-Token (106) mit
- einem Speicher (118),
wobei in einem ersten Speicherbereich (124) Attributswerte eines Nutzers (102) gespeichert sind, und
in einem zweiten Speicherbereich (126) Hash-Werte der Attributswerte gespeichert sind, die mit einem ersten Hash-Algorithmus ermittelten wurden,
wobei Mittel vorgesehen sind, um die Hash-Werte den jeweiligen Attributswerten zuzuordnen,
- einer Schnittstelle (112) zum Empfang einer Attributsanforderung (152) mit einer Attributsspezifikation, die mehrere Attribute spezifiziert, und einer Signaturanfrage, die die Attributsspezifikation enthält, und zum Senden der zu den Attributen korrespondierenden Attributswerte und einer elektronische Signatur für die Attributswerte,
- einem Prozessor (130),
wobei der Prozessor (130) zur Erzeugung einer Kombination der Hash-Werte der zur Attributsspezifikation korrespondierenden Attributswerte konfiguriert ist,
wobei der Prozessor zur Erzeugung eines Gesamt-Hash-Wertes aus der Kombination der Hash-Werte durch Ausführung eines zweiten Hash-Algorithmus nach Empfang der Signaturanfrage konfiguriert ist,
und wobei der Prozessor zur Erzeugung der elektronischen Signatur aus dem Gesamt-Hash-Wert konfiguriert ist.

2. ID-Token nach Anspruch 1, wobei der erste und der zweite Hash-Algorithmus identisch sind.

3. ID-Token nach Anspruch 1, wobei sich der erste und der zweite Hash-Algorithmus unterscheiden.

4. ID-Token nach einem der vorhergehenden Ansprüche, wobei der erste und der zweite Speicherbereiche (124, 126) eine Verzeichnisstruktur aufweisen, wobei die Verzeichnisstruktur des ersten und die Verzeichnisstruktur des zweiten Speicherbereichs übereinstimmen.

5. ID-Token nach einem der vorhergehenden Ansprüche, wobei den Attributswerten und den Hash-Werten jeweils eine eindeutige Indexierung zugeordnet ist, insbesondere ein File Identifier (FID), ein Short Identifier (SFI), wobei die Indexierung der Attributswerte mit der Indexierung der Hash-Werte übereinstimmt.

6. ID-Token nach einem der vorhergehenden Ansprüche, wobei der Prozessor (130) zur Erzeugung verschiedener Gesamt-Hash-Werte durch Ausführung eines von mehreren Hash-Algorithmen konfiguriert ist.

7. ID-Token nach einem der vorhergehenden Ansprüche, wobei zumindest ein dritter Speicherbereich vorgesehen ist, in dem Hash-Werte von Attributswerten gespeichert sind, die mit einem Hash-Algorithmus ermittelt wurden, der sich vom ersten Hash-Algorithmus unterscheidet.

8. ID-Token nach einem der vorhergehenden Ansprüche, wobei der Prozessor (130) zur Erzeugung von zumindest zwei verschiedenen Signaturen konfiguriert ist, wobei Mittel zur Auswahl der Signatur vorgesehen sind.

9. System (100) zur Erzeugung einer Signatur, mit einem ID-Token (106) nach einem der vorhergehenden Ansprüche und einem Terminal-Computersystem (104), das eine Schnittstelle (110) zum Aufbau einer Verbindung mit dem ID-Token (106) aufweist.

10. Verfahren zur Erzeugung einer elektronischen Signatur eines Nutzers (102) für ein elektronisches Dokuments, mit einem ID-Token (106) nach einem der vorhergehenden Ansprüche mit folgenden Schritten:
- Verbindungaufbau eines Terminal-Computersystems (104) mit dem ID-Token (106) über eine Schnittstelle (110) des Terminal-Computersystems (104) und die Schnittstelle (112) des ID-Token (106),
- Senden einer Attributsanforderung (152) mit einer Attributsspezifikation, die mehrere Attribute enthält, vom Terminal-Computersystem (104) an den ID-Token (106),
- Empfang der zur Attributsanforderung (152) korrespondierenden Attributswerte durch das Terminal-Computersystem (104) vom ID-Token (106),
- Senden einer Signaturanforderung vom Terminal-Computersystem (104) an den ID-Token (106), wobei die Signaturanforderung die Attributsspezifikation enthält,
- Erzeugung einer Kombination der Hash-Werte aus dem auf dem ID-Token (106) abgespeicherten Hash-Werten der zur Attributsspezifikation korrespondierenden Attributswerte durch den ID-Token (106),
- Erzeugung eines Gesamt-Hash-Wertes aus der Kombination der Hash-Werte durch Ausführung eines zweiten Hash-Algorithmus nach Empfang der Signaturanfrage durch den ID-Token (106),
- Erzeugung einer Signatur des Gesamt-Hash-Wertes mit dem privaten Schlüssel des Nutzers (102),
- Senden der Signatur an das Terminal-Computersystem (104), und
- Empfang der Signatur durch das Terminal-Computersystem (104).

11. Verfahren nach Anspruch 10, wobei das Terminal-Computersystem ein ID-Provider-Computersystem ist, und wobei der ein Nutzer PC vorgesehen ist, der eine Schnittstelle zur Kommunikation mit dem ID-Token aufweist mit folgende Schritten:
- Senden einer Dienstanfrage des Nutzers von dem Nutzer-Computersystem über ein Netzwerk an ein Dienst-Computersystem, das mit dem ID-Provider-Computersystem gekoppelt ist,
- Senden einer Attributsspezifikation vom Dienst-Computersystem an das ID-Provider-Computersystem über das Netzwerk, wobei die Attributsspezifikation diejenigen Attribute spezifiziert, die das Dienst-Computersystem zur Erbringung des mit der Dienstanforderung angeforderten Dienstes benötigt,
- Authentifizierung des Nutzers gegenüber dem ID-Token
- Authentifizierung des ID-Tokens gegenüber dem ID-Provider-Computersystem,
- Aufbau eines ersten gesicherten Übertragungskanals (SM[CA]#1) mit Ende-zu-Ende-Verschlüsselung zwischen dem ID-Token und dem ID-Provider-Computersystem über das Netzwerk,
- Durchführung eines ersten Lesezugriffs (107) des ID-Provider-Computersystems auf den ID-Token zum Lesen der Attribute gemäß der ersten Attributspezifikation aus dem ID-Token,
- Übertragung einer in dem Speicherbereich des ID-Tokens gespeicherten Attribute (109) von dem ID-Token an das ID-Provider-Computersystem über den ersten gesicherten Übertragungskanal,

12. Verfahren nach einem der Ansprüche 10 oder 11, wobei der Prozessor (130) des ID-Tokens (106) die Hash-Werte der Attributswerte erzeugt und die erzeugten Hash-Werte anschließend mit Mitteln zur Zuordnung der Hash-Werte zu den Attributswerten im Speicher (118) speichert.

13. Verfahren nach einem der Ansprüche 10 bis 12, **dadurch gekennzeichnet, dass** die Hash-Werte vor dem Speichern der Attributswerte auf dem ID-Token (106) erzeugt werden und gemeinsam mit den Attributswerten auf dem ID-Token (106) gespeichert werden.

14. Verfahren nach einem der Ansprüche 10 bis 13, wobei zum Nachladen von Attributswerten auf den ID-Token (106) die folgenden Schritte durchgeführt werden:
- Authentifizierung eines Attribut-Provider-Computersystems (172, 173, 174) gegenüber dem ID-Token (106),
- Authentifizierung des ID-Tokens (106) gegenüber dem Attribute-Provider-Computersystem (172, 173, 174),
- Aufbau eines zweiten gesicherten Übertragungskanals mit Ende-zu-Ende-Verschlüsselung zwischen dem Attribut-Provider-Computersystem (172, 173, 174) und dem ID-Token (106),
- Durchführung eines Schreibzugriffs des Attribut-Provider-Computersystems (172, 173, 174) über den gesicherten Übertragungskanal zum Speichern von Attributswerten in dem ID-Token (106),
- Speichern der Hash-Werte der Attributswerte, die mit dem ersten Hash-Algorithmus ermittelten wurden auf dem ID-Token (106).

15. Verfahren nach Anspruch 14, mit folgenden Schritten:
- nach dem Senden der Attributsanforderung (152) und dem Empfang einer im Speicherbereich des ID-Tokens (106) gespeicherten ersten Teilmenge der in der Attributsspezifikation spezifizierten Attribute von dem ID-Token (106) an das ID-Provider-Computersystem (104) wird eine zweite Attributspezifikation einer zweiten Teilmenge der Attribute der ersten Attributspezifikation, die diejenige Attribute spezifiziert, welche in der ersten Teilmenge nicht beinhaltet sind und nachgeladen werden sollen, erzeugt, an den ID-Token (106) übertragen wird und auf diesem gespeichert wird,
- Aufbau eines zweiten gesicherten Übertragungskanals mit Ende-zu-Ende-Verschlüsselung zwischen dem Attribut-Provider-Computersystem (172, 173, 174) und dem ID-Token,
- Übertragung der zweiten Attributspezifikation von dem ID-Token über den zweiten gesicherten Übertragungskanal an das Attribut-Provider-Computersystem,
- Durchführung eines zweiten Lesezugriffs (177) des ID-Provider-Computersystems über den ersten gesicherten Übertragungskanal zum Lesen der von dem Attribut-Provider-Computersystem gemäß der zweiten Attributspezifikation in dem ID-Token gespeicherten Attribute.

## Claims

1. An ID token (106) having
- a memory (118),
wherein attribute values of a user (102) are stored in a first memory area (124), and
hash values of the attribute values are stored in a second memory area (126), said hash values having been determined by a first hash algorithm,
wherein means are provided in order to associate the hash values with the corresponding attribute values,
- an interface (112) for receiving an attribute request (152) with an attribute specification, which specifies a plurality of attributes, and a signature request, which contains the attribute specification, and for sending the attribute values corresponding to the attributes and an electronic signature for the attribute values,
- a processor (130),
wherein the processor (130) is configured to generate a combination of the hash values of the attribute values corresponding to the attribute specification,
wherein the processor is configured to generate a total hash value from the combination of the hash values by executing a second hash algorithm following receipt of the signature request,
and wherein the processor is configured to generate the electronic signature from the total hash value.

2. The ID token according to claim 1, wherein the first and the second hash algorithm are identical.

3. The ID token according to claim 1, wherein the first and the second hash algorithm are different.

4. The ID token according to any one of the preceding claims, wherein the first and the second memory areas (124, 126) have a directory structure, wherein the directory structure of the first memory area and the directory structure of the second memory area match.

5. The ID token according to any one of the preceding claims, wherein the attribute values and the hash values are each associated with a unique indexing, in particular a file identifier (FID) or a short identifier (SFI), wherein the indexing of the attribute values matches the indexing of the hash values.

6. The ID token according to any one of the preceding claims, wherein the processor (130) is configured to generate different total hash values by executing one of a number of hash algorithms.

7. The ID token according to any one of the preceding claims, wherein at least one third memory area is provided, in which hash values of attribute values are stored, said hash values having been determined with a hash algorithm that differs from the first hash algorithm.

8. The ID token according to any one of the preceding claims, wherein the processor (130) is configured to generate at least two different signatures, wherein means for choosing the signature are provided.

9. A system (100) for generating a signature, comprising an ID token (106) according to any one of the preceding claims and a terminal computer system (104) which has an interface (110) for establishing a link to the ID token (106).

10. A method for generating an electronic signature of a user (102) for an electronic document comprising an ID token (106) according to any one of the preceding claims, said method comprising the following steps:
- establishing a link between a terminal computer system (104) and the ID token (106) via an interface (110) of the terminal computer system (104) and the interface (112) of the ID token (106),
- sending an attribute request (152) comprising an attribute specification containing a plurality of attributes from the terminal computer system (104) to the ID token (106),
- receiving the attribute values corresponding to the attribute request (152) from the ID token (106) by the terminal computer system (104),
- sending a signature request from the terminal computer system (104) to the ID token (106), wherein the signature request contains the attribute specification,
- generating, by the ID token (106), a combination of the hash values from the hash values of the attribute values, which hash values are stored on the ID token (106) and have values corresponding to the attribute specification,
- generating, by the ID token (106), a total hash value from the combination of the hash values by executing a second hash algorithm following receipt of the signature request,
- generating a signature of the total hash value using the private key of the user (102),
- sending the signature to the terminal computer system (104), and
- receiving the signature by the terminal computer system (104).

11. The method according to claim 10, wherein the terminal computer system is an ID provider computer system, and wherein a user PC is provided, which has an interface for communication with the ID token, said method having the following steps:
- sending a service request on the part of the user from the user computer system via a network to a service computer system which is coupled to the ID provider computer system,
- sending an attribute specification from the service computer system to the ID provider computer system via the network, wherein the attribute specification specifies those attributes that the service computer system requires in order to provide the service requested by way of the service request,
- authenticating the user to the ID token,
- authenticating the ID token to the ID provider computer system,
- establishing a first secured transmission channel (SM[CA]#1) with end-to-end encryption between the ID token and the ID provider computer system via the network,
- performing a first read access (107) by the ID provider computer system to the ID token in order to read the attributes from the ID token in accordance with the first attribute specification,
- transmitting one of the attributes (109) stored in the memory area of the ID token from the ID token to the ID provider computer system via the first secured transmission channel.

12. The method according to either one of claims 10 or 11, wherein the processor (130) of the ID token (106) generates the hash values of the attribute values and then stores the generated hash values in the memory (118) with means for associating the hash values with the attribute values.

13. The method according to any one of claims 10 to 12, **characterised in that** the hash values are generated prior to the storage of the attribute values on the ID token (106) and are stored jointly with the attribute values on the ID token (106).

14. The method according to any one of claims 10 to 13, wherein, in order to download attribute values onto the ID token (106), the following steps are performed:
- authenticating an attribute provider computer system (172, 173, 174) to the ID token (106),
- authenticating the ID token (106) to the attribute provider computer system (172, 173, 174),
- establishing a second secured transmission channel with end-to-end encryption between the attribute provider computer system (172, 173, 174) and the ID token (106),
- performing a write access by means of the attribute provider computer system (172, 173, 174) via the second secured transmission channel in order to store attribute values in the ID token (106),
- storing, on the ID token (106), the hash values of the attribute values that were determined with the first hash algorithm.

15. The method according to claim 14, with the following steps:
- following the sending of the attribute request (152) and the receipt of a first subset of the attributes specified in the attribute specification, which first subset is stored in the memory area of the ID token (106), from the ID token (106) at the ID provider computer system (104), a second attribute specification of a second subset of the attributes of the first attribute specification which specifies those attributes which are not included in the first subset and are to be downloaded is generated, transmitted to the ID token (106), and stored thereon,
- establishing a second secured transmission channel with end-to-end encryption between the attribute provider computer system (172, 173, 174) and the ID token,
- transmitting the second attribute specification from the ID token via the second secured transmission channel to the attribute provider computer system,
- performing a second read access (177) by means of the ID provider computer system via the first secured transmission channel in order to read the attributes stored in the ID token by the attribute provider computer system according to the second attribute specification.

## Revendications

1. Jeton d'identification (106) doté
- d'une mémoire (118),
où des valeurs d'attributs d'un utilisateur (102) sont stockées dans une première zone de mémoire (124), et
des valeurs de hachage des valeurs d'attributs, qui ont été déterminées avec un premier algorithme de hachage, sont stockées dans une deuxième zone de mémoire (126),
où des moyens sont prévus pour associer les valeurs de hachage aux valeurs d'attributs respectives,
- d'une interface (112) pour la réception d'une demande d'attributs (152) avec une spécification d'attributs qui spécifie plusieurs attributs et d'une demande de signature qui contient la spécification d'attributs et pour l'envoi des valeurs d'attributs correspondant aux attributs et d'une signature électronique pour les valeurs d'attributs,
- d'un processeur (130),
où le processeur (130) est configuré pour la création d'une combinaison des valeurs de hachage des valeurs d'attributs correspondant à la spécification d'attributs,
où le processeur est configuré pour la création d'une valeur de hachage d'ensemble à partir de la combinaison des valeurs de hachage par l'exécution d'un deuxième algorithme de hachage après la réception de la demande de signature,
et où le processeur est configuré pour la création de la signature électronique à partir de la valeur de hachage d'ensemble.

2. Jeton d'identification selon la revendication 1, dans lequel les premier et deuxième algorithmes de hachage sont identiques.

3. Jeton d'identification selon la revendication 1, dans lequel les premier et deuxième algorithmes de hachage sont différents.

4. Jeton d'identification selon l'une des revendications précédentes, dans lequel les première et deuxième zones de mémoire (124, 126) présentent une structure de répertoire, où la structure de répertoire de la première zone de mémoire et la structure de répertoire de la deuxième zone de mémoire correspondent.

5. Jeton d'identification selon l'une des revendications précédentes, dans lequel une indexation sans équivoque est respectivement attribuée aux valeurs d'attributs et aux valeurs de hachage, notamment un identificateur de fichier (FID), un identificateur de fichier court (SFI), où l'indexation des valeurs d'attributs correspond avec l'indexation des valeurs de hachage.

6. Jeton d'identification selon l'une des revendications précédentes, dans lequel le processeur (130) est configuré pour la création de différentes valeurs de hachage d'ensemble par l'exécution d'un parmi plusieurs algorithmes de hachage.

7. Jeton d'identification selon l'une des revendications précédentes, dans lequel au moins une troisième zone de mémoire est prévue dans laquelle des valeurs de hachage sont stockée par des valeurs d'attributs qui ont été déterminées avec un algorithme de hachage qui diffère du premier algorithme de hachage.

8. Jeton d'identification selon l'une des revendications précédentes, dans lequel le processeur (130) est configuré pour la création d'au moins deux signatures différentes, où des moyens pour la sélection de la signature sont prévus.

9. Système (100) permettant la création d'une signature avec un jeton d'identification (106) selon l'une des revendications précédentes et un système informatique de terminal (104) qui présente une interface (110) pour l'établissement d'une communication avec le jeton d'identification (106).

10. Procédé de création d'une signature électronique d'un utilisateur (102) pour un document électronique avec un jeton d'identification (106) selon l'une des revendications précédentes, avec les étapes suivantes :
- l'établissement d'une communication d'un système informatique de terminal (104) avec le jeton d'identification (106) par le biais d'une interface (110) du système informatique de terminal (104) et de l'interface (112) du jeton d'identification (106),
- l'envoi d'une demande d'attributs (152) avec une spécification d'attributs qui contient plusieurs attributs, par le système informatique de terminal (104) au jeton d'identification (106),
- la réception des valeurs d'attributs correspondant à la demande d'attributs par le système informatique de terminal (104) à partir du jeton d'identification (106),
- l'envoi d'une demande de signature du système informatique de terminal (104) au jeton d'identification (106), où la demande de signature contient la spécification d'attributs,
- la création d'une combinaison des valeurs de hachage à partir des valeurs de hachage déstockées à partir du jeton d'identification (106) des valeurs d'attributs correspondant à la spécification d'attributs par le jeton d'identification (106),
- la création d'une valeur de hachage d'ensemble à partir de la combinaison des valeurs de hachage par l'exécution d'un deuxième algorithme de hachage après la réception de la demande de signature par le jeton d'identification (106),
- la création d'une signature de la valeur de hachage d'ensemble avec la clé privée de l'utilisateur (102),
- l'envoi de la signature au système informatique de terminal (104) et
- la réception de la signature par le système informatique de terminal (104).

11. Procédé selon la revendication 10, dans lequel le système informatique de terminal est un système informatique de fournisseur d'identification et dans lequel un PC d'utilisateur est prévu, qui présente une interface permettant la communication avec le jeton d'identification, avec les étapes suivantes :
- l'envoi d'une demande de service de l'utilisateur du système informatique d'utilisateur à un système informatique de service qui est couplé avec le système informatique de fournisseur d'identification, par le biais d'un réseau,
- l'envoi d'une spécification d'attributs du système informatique de service au système informatique de fournisseur d'identification par le biais du réseau, où la spécification d'attributs spécifie les attributs en question qui sont nécessaires au système informatique de service pour l'apport du service demandé avec la demande de service,
- l'authentification de l'utilisateur vis-à-vis du jeton d'identification
- l'authentification du jeton d'identification vis-à-vis du système informatique de fournisseur d'identification,
- l'établissement d'un premier canal de transmission sécurisé (SM[CA]#1) avec un cryptage de bout en bout entre le jeton d'identification et le système informatique de fournisseur d'identification par le biais du réseau,
- l'exécution d'un premier accès en lecture (107) du système informatique de fournisseur d'identification pour le jeton d'identification en vue de la lecture des attributs selon la première spécification d'attributs à partir du jeton d'identification,
- la transmission de quelques uns des attributs (109) stockés dans la zone de mémoire du jeton d'identification à partir du jeton d'identification vers le système informatique de fournisseur d'identification par le biais du premier canal de transmission sécurisé.

12. Procédé selon l'une des revendications 10 ou 11, dans lequel le processeur (130) du jeton d'identification (106) crée les valeurs de hachage des valeurs d'attributs et stocke ensuite les valeurs de hachage créées avec des moyens pour l'association des valeurs de hachage avec les valeurs d'attributs dans la mémoire (118).

13. Procédé selon l'une des revendications 10 à 12, **caractérisé en ce que** les valeurs de hachage sont créées avant le stockage des valeurs d'attributs sur le jeton d'identification (106) et sont stockées conjointement avec les valeurs d'attributs sur le jeton d'identification (106).

14. Procédé selon l'une des revendications 10 à 13, dans lequel les étapes suivantes sont exécutées pour la recharge de valeurs d'attributs sur le jeton d'identification (106) :
- l'authentification d'un système informatique de fournisseur d'attributs (172, 173, 174) vis-à-vis du jeton d'identification (106),
- l'authentification du jeton d'identification (106) vis-à-vis du système informatique de fournisseur d'attributs (172, 173, 174),
- l'établissement d'un deuxième canal de transmission sécurisé avec un cryptage de bout en bout entre le système informatique de fournisseur d'attributs (172, 173, 174) et le jeton d'identification (106),
- l'exécution d'un accès en écriture du système informatique de fournisseur d'attributs (172, 173, 174) par le biais du canal de transmission sécurisé pour le stockage de valeurs d'attributs dans le jeton d'identification (106),
- le stockage sur le jeton d'identification (106) des valeurs de hachage des valeurs d'attributs qui ont été déterminées avec le premier algorithme de hachage.

15. Procédé selon la revendication 14, avec les étapes suivantes :
- après l'envoi de la demande d'attributs (152) et la réception d'une première quantité partielle stockée dans la zone de mémoire du jeton d'identification (106) des attributs spécifiés dans la spécification d'attributs du jeton d'identification (106) au système informatique de fournisseur d'identification (104), une deuxième spécification d'attributs d'une deuxième quantité partielle des attributs de la première spécification d'attributs qui spécifie les attributs en question lesquels ne sont pas contenus dans la première quantité partielle et qui doivent être rechargés, est créée, est transmise au jeton d'identification (106) et est stockée sur celui-ci,
- l'établissement d'un deuxième canal de transmission sécurisé avec un cryptage de bout en bout entre le système informatique de fournisseur d'attributs (172, 173, 174) et le jeton d'identification,
- la transmission de la deuxième spécification d'attributs du jeton d'identification par le biais du deuxième canal de transmission sécurisé au système informatique de fournisseur d'attributs,
- l'exécution d'un deuxième accès en lecture (177) du système informatique de fournisseur d'identification par le biais du premier canal de transmission sécurisé pour la lecture des attributs stockés dans le jeton d'identification par le système informatique de fournisseur d'attributs selon la deuxième spécification d'attributs.
